# FASCICULE DE BREVET EUROPEEN

(11) **EP 3 978 793 B1**
(45) Date de publication et mention de la délivrance du brevet: **26.04.2023**
(21) Numéro de dépôt: 21194015.0
(22) Date de dépôt: 31.08.2021
(51) Int. Cl.: F16N 7/00, F16N 7/36, F16D 41/061, F16D 41/066, F16H 57/04

(54) **SYSTEME DE CONNEXION EN ROTATION MUNI D'UNE ROUE LIBRE ET D'UN DISPOSITIF DE LUBRIFICATION**
DREHVERBINDUNGSSYSTEM, DAS MIT EINEM FREILAUF UND EINER SCHMIERVORRICHTUNG AUSGESTATTET IST
SYSTEM FOR CONNECTION IN ROTATION PROVIDED WITH A FREE WHEEL AND A LUBRICATION DEVICE

(30) Priorité: 01.10.2020 FR 2010056
(43) Date de publication de la demande: 06.04.2022
(73) Titulaire: Airbus Helicopters, 13725 Marignane Cedex (FR)
(72) Inventeur: ZAMPONI, Laurent, 13127 VITROLLES (FR); LE RU, John, 13660 ORGON (FR)
(74) Mandataire: GPI Brevets

(56) Documents cités:
- FR-A1- 2 553 850
- JP-A- 2017 003 002
- US-A- 4 615 414

## Description

La présente invention concerne un système de connexion en rotation muni d'une roue libre et d'un dispositif de lubrification. L'invention se situe ainsi dans le domaine technique de la lubrification d'une roue libre, et en particulier d'une roue libre installée à l'intérieur d'une boîte de transmission de puissance.

Une roue libre est usuellement munie d'une partie menante, d'une partie menée, et d'au moins un organe de liaison en rotation.

A l'arrêt ou tant que la partie menée tourne plus vite que la partie menante autour d'un axe de rotation, la roue libre est dans un mode de fonctionnement dénommé « désynchronisé » ou « désengagé » par commodité. La partie menante ne transmet pas un couple moteur à la partie menée et inversement. La partie menée et la partie menante sont désolidarisées en rotation autour de l'axe de rotation.

Par contre, dans un mode de fonctionnement dénommé « synchronisé » ou « engagé », la partie menante et la partie menée tournent à la même vitesse et conjointement autour de l'axe de rotation. La partie menante transmet un couple moteur à la partie menée via le ou les organes de liaison.

Selon un exemple, une roue libre à rouleaux peut comporter une partie menante ayant une partie périphérique munie de rampes. Chaque rampe est inclinée par rapport à une direction tangente à un cercle centré sur l'axe de rotation. Cette partie périphérique munie de rampes est parfois dénommée « roue à rampes ». A l'inverse, la partie menée comporte un moyeu disposé autour de la partie menante, ce moyeu comportant un anneau ayant une face cylindrique au regard des rampes. Par suite, des organes de liaison de type rouleaux sont portés par une cage et sont disposés dans l'espace séparant radialement les rampes et la face cylindrique. Durant le mode de fonctionnement désengagé, les rouleaux sont chacun disposés au pied d'une rampe et ne lient pas en rotation la partie menante et la partie menée. Lors du passage vers le mode de fonctionnement synchronisé, les rouleaux sont déplacés vers le sommet des rampes et se coincent temporairement entre les rampes et la face cylindrique. La partie menante entraîne alors en rotation la partie menée via les rouleaux.

Cette réalisation comporte alors un arbre interne menant muni de la roue à rampes et d'un anneau mené ayant une face cylindrique agencée autour de l'arbre interne menant.

Alternativement, une roue libre peut comprendre un anneau menant à rampes entourant un arbre mené ayant une face cylindrique.

Un autre type de roue libre comporte au moins un cliquet.

Au sein d'une installation motrice d'un giravion, la partie menante d'une roue libre peut être reliée à un moteur alors que la partie menée de la roue libre peut être reliée à un rotor. La roue libre peut être agencée au sein du moteur, ou au sein d'une boîte de transmission de puissance voire au sein d'une chaîne cinématique reliant un moteur à la boîte de transmission de puissance. Par exemple, la boîte de transmission de puissance peut comprendre un système d'entrée mécanique de transmission de couple par moteur, chaque système d'entrée mécanique de transmission de couple incluant une roue libre.

Quel que soit son agencement, une roue libre peut être lubrifiée pour optimiser sa durée de vie.

Selon une première réalisation connue, un système de connexion en rotation comporte une roue libre graissée. La graisse peut tendre à limiter l'échauffement des organes de la roue libre au niveau des zones de contact entre les divers éléments pour limiter leur usure. Ces zones de contact peuvent notamment comprendre, sur une roue libre à rouleaux, les rouleaux ainsi que les rampes et la face cylindrique. Toutefois, la graisse peut avoir un impact sur la vitesse de rotation de la partie menée notamment.

Selon une deuxième réalisation, les zones de contact, notamment les rouleaux dans le cadre d'une roue libre à rouleaux, baignent dans un bain d'huile.

Noyer les organes de la roue libre dans de l'huile est efficace pour éviter l'échauffement des zones de contact, et ainsi limiter l'usure de la roue libre, durant le mode de fonctionnement engagé.

A contrario, durant le mode de fonctionnement désengagé, l'huile elle-même peut être source d'échauffement par un effet de barbotage.

Une troisième réalisation connue consiste à arroser les zones de contact avec de l'huile. Par exemple, un système de connexion en rotation comporte un gicleur acheminant une faible quantité d'huile dans la partie menante. Cette partie menante comporte alors au moins un orifice radial pour diriger l'huile vers les rouleaux, et donc vers les zones de contact de la roue libre.

Cette troisième réalisation permet ainsi de faire circuler une faible quantité de lubrifiant vers les zones de contact durant le mode de fonctionnement désengagé. La circulation d'une faible quantité d'huile permet de limiter l'échauffement des zones de contact.

Par contre, contrairement à la deuxième réalisation, la troisième réalisation ne permet de fait pas de noyer les zones de contact durant le mode de fonctionnement engagé.

Chacune des réalisations précédentes est donc intéressante mais présente un inconvénient.

Le document DE4036209 C1 est éloigné de cette problématique en ayant trait à la lubrification d'un train d'engrenage épicycloïdal.

Le document US20170122386 A1 décrit une roue libre munie de rouleaux coopérant avec un système élastique. Selon une variante, la roue libre peut être lubrifiée.

Le document FR 2 553 850 décrit un système de transmission à train épicycloïdal, pour un véhicule automobile, muni d'une roue intérieure, d'une roue extérieure et de roues satellites. Le système comporte une roue libre et un dispositif de lubrification. Le dispositif de lubrification est muni d'un collecteur se comportant à peu près à la façon d'un collecteur immobilisé lorsque la roue intérieure est freinée et immobilisée.

La présente invention a alors pour objet de proposer un système de connexion en rotation innovant muni d'une roue libre et d'un dispositif de lubrification visant à être performant aussi bien durant le mode de fonctionnement engagé que durant le mode de fonctionnement désengagé.

Ainsi, l'invention vise un système de connexion en rotation muni d'une roue libre, ladite roue libre comprenant une partie menante et une partie menée qui sont mobiles en rotation autour d'un axe de rotation, ladite roue libre comprenant au moins un organe de liaison en rotation agencé dans un espace de liaison, ledit espace de liaison étant situé radialement par rapport à l'axe de rotation entre un tronçon de liaison menant de la partie menante et un tronçon de liaison mené de la partie menée, ledit système de connexion en rotation comprenant un dispositif de lubrification pour lubrifier la roue libre, ledit dispositif de lubrification comprenant un fluide de lubrification.

En outre, ledit dispositif de lubrification comporte un dispositif de mise en circulation fluidique solidaire en rotation, autour de l'axe de rotation, d'un tronçon de pompage mené de la partie menée, un tronçon de pompage menant de la partie menante et ledit tronçon de pompage mené étant agencés l'un autour de l'autre radialement par rapport à l'axe de rotation, ledit dispositif de mise en circulation fluidique étant mis en rotation par rapport au tronçon de pompage menant en présence d'une vitesse de rotation menante autour de l'axe de rotation dudit tronçon de pompage menant inférieure à une vitesse de rotation menée autour de l'axe de rotation dudit tronçon de pompage mené pour engendrer une circulation forcée dudit fluide de lubrification au sein dudit espace de liaison.

Durant le mode de fonctionnement désengagé, la partie menée effectue de fait une rotation autour de l'axe de rotation avec une vitesse supérieure à une vitesse de rotation de la partie menante autour de cet axe de rotation. Dans ce mode de fonctionnement désengagé, le dispositif de mise en circulation fluidique est mis en rotation par la partie menée par rapport au tronçon de pompage menant. Par suite, le dispositif de mise en circulation fluidique tend à aspirer le fluide de lubrification. Le fluide de lubrification circule au sein de l'espace de liaison. Le dispositif de mise en circulation fluidique tend à limiter les effets de barbotage décrit précédemment en vidant l'espace de liaison de son fluide.

A l'inverse, durant le mode de fonctionnement engagé, la partie menée effectue de fait une rotation autour de l'axe de rotation conjointement avec la partie menante autour de cet axe de rotation. Par conséquent, le dispositif de mise en circulation fluidique n'est pas mis en rotation par la partie menée par rapport au tronçon de pompage menant. Le dispositif de mise en circulation fluidique est ainsi inactif et ne tend plus à aspirer le fluide de lubrification. Les zones de contact de la roue libre tendent alors à être noyées dans ce fluide de lubrification. Le dispositif de mise en circulation fluidique en mode repos est donc conçu de manière à créer une barrière de rétention de fluide avec un niveau de fluide visant à noyer toutes les zones de contact dans la roue libre.

Dès lors, le dispositif de lubrification peut permettre de lubrifier correctement les zones de contact de la roue libre lorsque la roue libre se trouve dans le mode de fonctionnement engagé mais aussi dans le mode de fonctionnement désengagé.

Le système de connexion en rotation peut de plus comporter une ou plusieurs des caractéristiques qui suivent, prises seules ou combinaison.

Selon une possibilité, le dispositif de mise en circulation fluidique peut être fixé au tronçon de pompage mené.

Alternativement, le dispositif de mise en circulation fluidique peut être intégré au tronçon de pompage mené. Le tronçon de pompage mené et le dispositif de mise en circulation fluidique sont alors des éléments d'une même pièce monolithique.

De manière complémentaire ou alternativement, le tronçon de pompage mené peut être indépendant ou peut former une pièce monolithique avec d'autres constituants de la partie menée.

Selon une possibilité compatible avec les précédentes, la partie menante peut comporter une pièce monolithique ou plusieurs pièces.

Selon une possibilité compatible avec les précédentes, la partie menante peut entourer au moins partiellement la partie menée ou la partie menante peut être entourée au moins partiellement par la partie menée.

Indépendamment de ces diverses possibilités, selon une première réalisation, le dispositif de mise en circulation fluidique peut comporter une pompe.

Une telle pompe permet d'aspirer le fluide de lubrification pour le faire circuler au travers de l'espace de liaison durant le mode de fonctionnement désengagé.

Par exemple, la pompe peut être munie d'un impulseur tournant qui est solidaire en rotation du tronçon de pompage mené.

Le terme « impulseur » désigne un organe tournant mettant en mouvement le fluide de lubrification. Par exemple, la pompe peut être une pompe centrifuge axiale. Dès lors, l'impulseur peut comprendre des aubes solidaires en rotation de la partie menée.

Selon une deuxième réalisation, le dispositif de mise en circulation fluidique peut comporter une vis sans fin. Une telle vis sans fin forme une vis dite d'Archimède

Le dispositif de mise en circulation fluidique est alors relativement simple en utilisant une vis sans fin faisant office de pompe.

Par exemple, la vis sans fin peut comporter au moins une cannelure hélicoïdale solidaire en rotation du tronçon de pompage mené.

L'expression cannelure hélicoïdale couvre une cannelure ayant une forme hélicoïdale, à savoir une cannelure suivant une hélice.

La vis sans fin peut comprendre une seule cannelure formant un unique filet en hélice. Cependant, la vis sans fin peut par exemple comporter au moins deux filets, et notamment la vis sans fin peut comporter deux cannelures de forme hélicoïdale formant deux filets. Le nombre de filets peut être déterminé par essais, calculs ou simulations pour optimiser le débit du fluide de lubrification lorsque le système de connexion en rotation est disposé au sein d'un système mécanique. Le nombre de filets peut notamment dépendre des vitesses de rotation relatives de la partie menante et de la partie menée en utilisation.

Selon une alternative, le tronçon de pompage mené peut être de forme conique.

Selon une possibilité compatible avec les précédentes et indépendamment du mode de réalisation, ledit au moins un organe de liaison en rotation peut comporter une pluralité d'éléments roulants, chaque élément roulant étant mobile sur une rampe de ladite partie menante.

La roue libre est alors une roue libre à rampes. L'invention est toutefois applicable à des roues libres à obstacles et à galets de formes, et notamment des roues libres à cliquets.

Selon une possibilité compatible avec les précédentes et indépendamment du mode de réalisation, ledit dispositif de lubrification peut comporter au moins un orifice radial débouchant dans un espace d'injection, ledit espace d'injection étant situé radialement par rapport à l'axe de rotation entre un tronçon d'injection menant de la partie menante et un tronçon d'injection mené de la partie menée.

Ainsi, le dispositif de lubrification peut comprendre un ou plusieurs orifices radiaux pour acheminer le fluide de lubrification entre la partie menante et la partie menée, et plus précisément dans un espace dénommé par commodité « espace d'injection » en raison de l'injection du fluide de lubrification dans cet espace.

Eventuellement, ledit tronçon de liaison menant peut être situé entre ledit tronçon de pompage menant et ledit tronçon d'injection menant, et ledit tronçon de liaison mené peut être situé entre ledit tronçon de pompage mené et ledit tronçon d'injection mené, par exemple au regard d'une direction parallèle à l'axe de rotation.

Par conséquent, l'aspiration réalisée par le dispositif de mise en circulation fluidique permet bien de faire circuler le fluide de lubrification de l'espace d'injection vers l'espace de liaison contenant les zones de contact à lubrifier.

Selon une possibilité compatible avec les précédentes et indépendamment du mode de réalisation, une partie entourée de la partie menée est entourée au moins partiellement de la partie menante ou une partie entourée de la partie menante est entourée au moins partiellement par la partie menée, ledit au moins un orifice radial est ménagé dans la partie entourée, ladite partie entourée entourant un espace interne, ledit au moins un orifice radial étant en communication fluidique avec l'espace interne et l'espace d'injection.

Autrement dit, lorsque la partie menante entoure au moins partiellement la partie menée, alors cette partie menée représente la partie entourée. Par contre, lorsque la partie menée entoure au moins partiellement la partie menante, alors cette partie menante représente la partie entourée. Dans tous les cas, selon cette possibilité, la partie entourée peut délimiter un espace interne en liaison fluidique avec l'espace d'injection par un ou plusieurs orifices dénommés radiaux en raison de leur extension au regard de l'axe de rotation.

Alternativement, le fluide de lubrification peut être introduit par un orifice radial ménagé dans la partie menante ou menée qui entoure l'autre partie.

Selon une possibilité compatible avec les précédentes et indépendamment du mode de réalisation, au moins ladite partie menante ou ladite partie menée comporte au moins un passage pour évacuer ledit fluide de lubrification, ledit dispositif de mise en circulation fluidique étant disposé selon l'axe de rotation, à savoir au regard d'une direction parallèle à l'axe de rotation, entre ledit espace de liaison et ledit au moins un passage. Un tel dispositif vise à favoriser l'évacuation du fluide de lubrification.

Le ou les passages permettent d'évacuer le fluide de lubrification. Par exemple, le fluide de lubrification circule éventuellement dans l'espace interne précité puis rejoint l'espace d'injection via le ou les orifices radiaux. Le fluide de lubrification se déplace au moins vers l'espace d'injection, traverse le dispositif de mise en circulation fluidique et s'échappe par le ou les passages. Eventuellement, à partir de l'espace d'injection, une portion du fluide de lubrification peut se déplacer selon une direction opposée à la direction allant vers l'espace d'injection.

Selon une possibilité compatible avec les précédentes et indépendamment du mode de réalisation, ledit dispositif de lubrification peut comporter un injecteur qui injecte ledit fluide de lubrification dans ledit espace interne.

Le terme « injecteur » est à interpréter au sens large et désigne un organe susceptible d'introduire le fluide de lubrification dans l'espace interne. Par exemple, le terme injecteur peut désigner un gicleur, une extrémité ouverte d'un tuyau...

Selon une possibilité compatible avec les précédentes et indépendamment du mode de réalisation, ledit système de connexion en rotation peut comporter au moins un palier de guidage en rotation agencé entre la partie menante et la partie menée.

Un tel palier de guidage vise à guider une rotation relative de la partie menante et de la partie menée.

Par ailleurs, un véhicule peut comporter un système de connexion en rotation selon l'invention.

A titre d'exemple, un tel véhicule peut être un aéronef, voire un giravion, voire un hélicoptère.

L'invention vise aussi un procédé de lubrification d'un système de connexion en rotation qui est muni d'une roue libre, ladite roue libre comprenant une partie menante et une partie menée mobile en rotation autour d'un axe de rotation, ladite roue libre comprenant au moins un organe de liaison en rotation agencé dans un espace de liaison, ledit espace de liaison étant situé radialement par rapport à l'axe de rotation entre un tronçon de liaison menant de la partie menante et un tronçon de liaison mené de la partie menée, ledit système de connexion en rotation comprenant un dispositif de lubrification pour lubrifier la roue libre, ledit dispositif de lubrification comprenant un fluide de lubrification.

Le procédé peut être mis en oeuvre par un système selon l'invention. Le procédé peut comporter les étapes suivantes :
- durant un mode de fonctionnement désengagé de la roue libre pendant lequel ladite partie menante et ladite partie menée sont désolidarisées en rotation autour dudit axe de rotation, mise en rotation, par rapport à un tronçon de pompage menant de la partie menante, d'un dispositif de mise en circulation fluidique du dispositif de lubrification par différentiel de vitesse entre une vitesse de rotation menante, autour de l'axe de rotation, dudit tronçon de pompage menant et une vitesse de rotation menée, autour de l'axe de rotation, d'un tronçon de pompage mené solidaire en rotation du dispositif de mise en circulation fluidique, et déplacement forcé dudit fluide de lubrification au sein dudit espace de liaison au moins sous influence dudit dispositif de mise en circulation fluidique.

Durant ce mode de fonctionnement désengagé, le système peut être dimensionné pour que le débit de fuite du fluide de lubrification au travers de l'espace de liaison soit supérieur à un débit d'alimentation selon lequel le fluide de lubrification est introduit dans ce système.

Par ailleurs, durant un mode de fonctionnement engagé de la roue libre pendant lequel ladite partie menante et ladite partie menée sont en rotation conjointement autour dudit axe de rotation, le procédé peut prévoir une inhibition dudit déplacement forcé.

Toutefois, durant ce mode de fonctionnement engagé, le système peut être dimensionné pour que le débit de fuite du fluide de lubrification au travers de l'espace de liaison soit non nul mais inférieur au débit d'alimentation.

L'invention et ses avantages apparaîtront avec plus de détails dans le cadre de la description qui suit avec des exemples donnés à titre illustratif en référence aux figures annexées qui représentent :
la figure 1, une vue présentant partiellement un système de connexion en rotation selon l'invention durant un mode de fonctionnement engagé et en trois dimensions,
la figure 2, une vue présentant partiellement le système de connexion en rotation de la figure 1 durant un mode de fonctionnement désengagé et en trois dimensions,
la figure 3, une vue présentant un système de connexion en rotation muni d'une pompe solidaire d'une partie menée entourant une partie menante,
la figure 4, une vue présentant un système de connexion en rotation muni d'un vis sans fin solidaire d'une partie menée entourée par une partie menante,
la figure 5, une vue présentant un système de connexion en rotation muni d'une pompe solidaire d'une partie menée entourée par une partie menante, et
la figure 6, une vue présentant un système de connexion en rotation muni d'une vis sans fin solidaire d'une partie menée de forme conique.

Les éléments présents dans plusieurs figures distinctes sont affectés d'une seule et même référence.

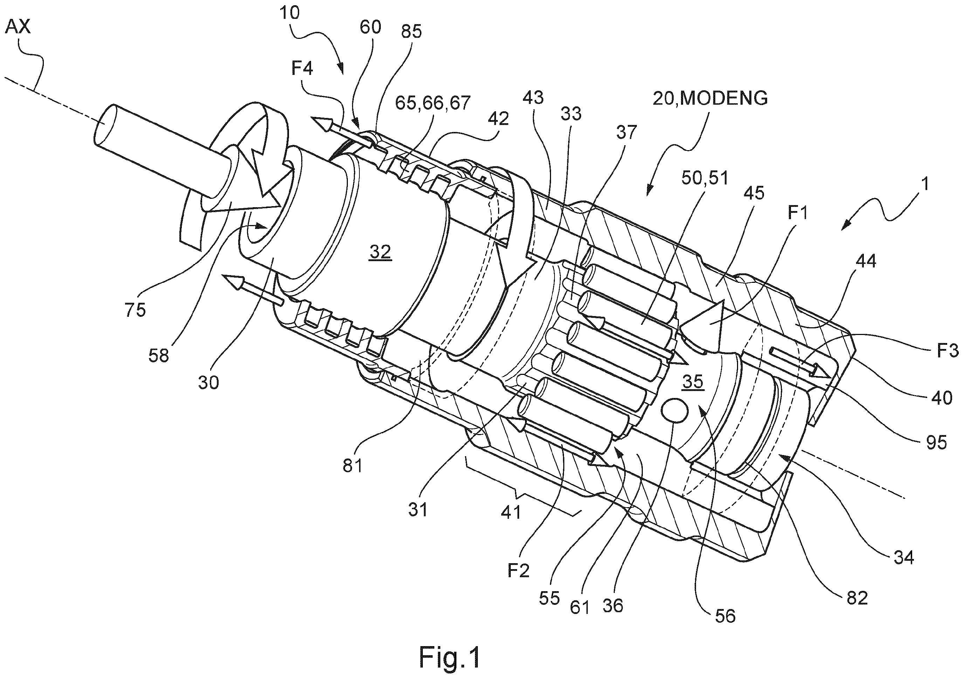

La figure 1 présente un système 10 de connexion en rotation muni d'une roue libre 20. La roue libre 20 est pourvue d'une partie menante 30 et d'une partie menée 40 qui sont chacune mobiles en rotation autour d'un même axe de rotation AX. La partie menante 30 peut être une pièce monolithique ou peut comprendre plusieurs pièces fixées les unes aux autres. La partie menée 40 peut être une pièce monolithique ou peut comprendre plusieurs pièces fixées les unes aux autres. Au moins un tronçon de la partie menante 30 ou de la partie menée 40 peut présenter une symétrie de révolution par rapport à l'axe de rotation AX.

Selon une première variante de positionnement, la partie menante 30 peut se trouver radialement au moins partiellement entre l'axe de rotation AX et la partie menée 40. Selon l'illustration des figures 1, 2, 3 et 6, la partie menante 30 peut être entourée par la partie menée 40.

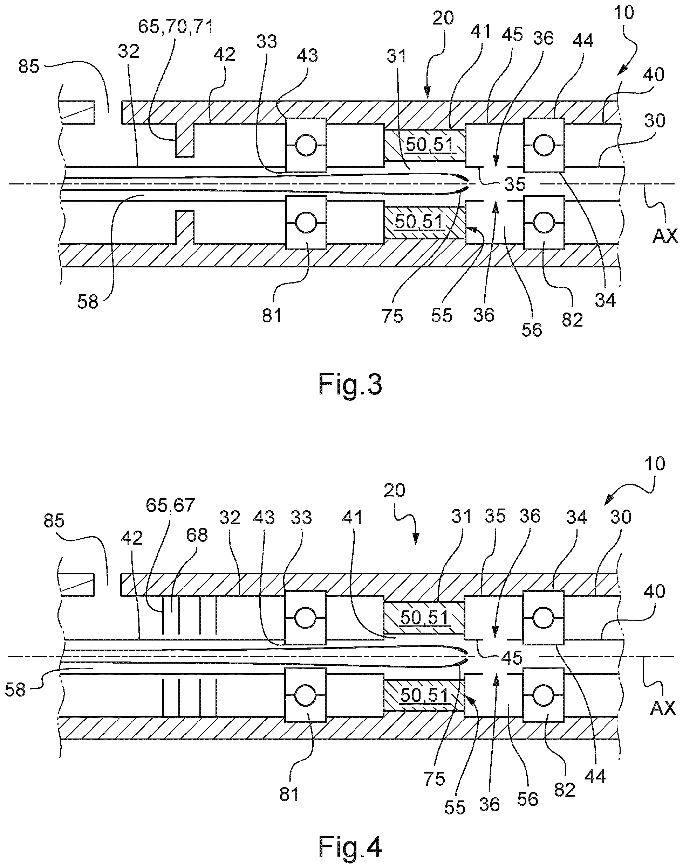

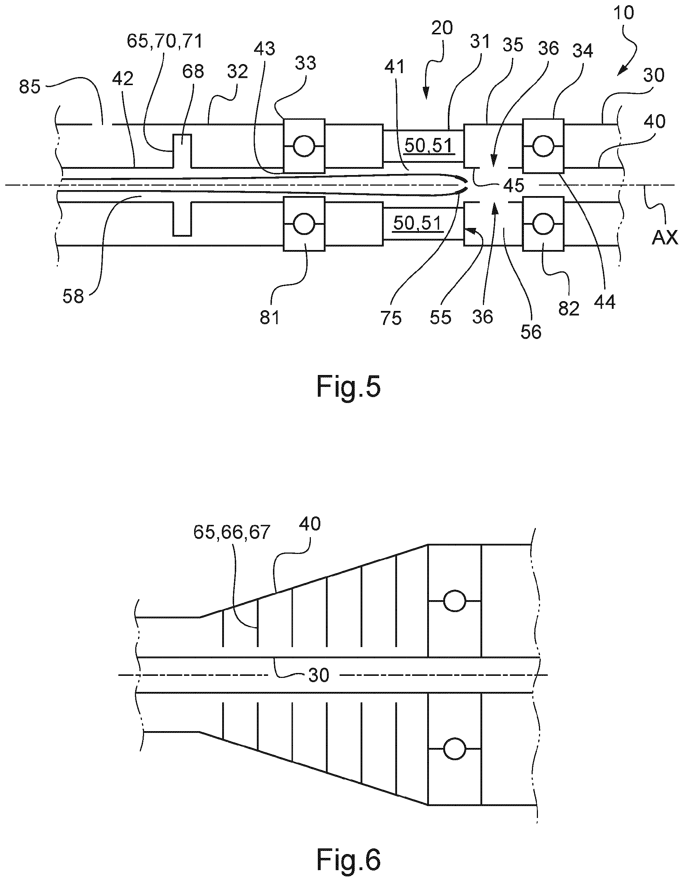

Selon une deuxième variante de positionnement illustrée avec les exemples des figures 4 et 5, la partie menée 40 peut se trouver radialement au moins partiellement entre l'axe de rotation AX et la partie menante 30. La partie menante 30 entoure alors la partie menée 40.

Quelle que soit la variante, une des partie menante 30 et partie menée 40 peut alors être qualifiée de « partie entourée ». Ainsi, la partie entourée est la partie menante 30 selon la première variante de positionnement ou la partie menée 40 selon la deuxième variante de positionnement.

Indépendamment de la position relative de la partie menante 30 et de la partie menée 40, le système 10 de connexion en rotation peut être agencé au sein de tout type d'architecture.

Par exemple, le système 10 de connexion en rotation peut être agencé au sein d'un véhicule 1. En particulier, le système 10 de connexion en rotation peut être disposé au sein d'un giravion. Selon un exemple, la partie menante 30 peut être reliée par une chaîne cinématique à un moteur alors que la partie menée 40 peut être reliée par une autre chaîne cinématique à un rotor.

Quel que soit son agencement, la roue libre 20 comprend au moins un organe 50 de liaison en rotation pour d'une part lier en rotation autour de l'axe de rotation AX la partie menante 30 et la partie menée 40 durant un mode de fonctionnement engagé et, d'autre part, pour désolidariser en rotation autour de l'axe de rotation AX la partie menante 30 et la partie menée 40 durant un mode de fonctionnement désengagé.

Indépendamment du nombre d'organe 50 de liaison en rotation, chaque organe 50 de liaison en rotation est agencé dans un espace qui est dénommé « espace de liaison 55 » par commodité et en raison du rôle tenu par chaque organe 50 de liaison en rotation. Cet espace de liaison 55 s'étend radialement, à savoir par rapport à l'axe de rotation AX et donc perpendiculairement à cet axe de rotation AX, entre la partie menante 30 et la partie menée 40. En particulier, l'espace de liaison 55 est disposé entre un tronçon de la partie menante 30 dénommé « tronçon de liaison menant 31 » par commodité, et un tronçon de la partie menée 40 dénommé « tronçon de liaison mené 41 » par commodité.

Par exemple, au moins un voire le cas échéant chaque organe 50 de liaison en rotation peut prendre la forme d'un élément roulant 51. Un tel élément roulant 51 peut être du type d'un rouleau ou d'une bille par exemple.

Dès lors, la partie menante 30 peut comprendre une rampe 37 par élément roulant 51. Chaque rampe 37 peut présenter une face inclinée ou courbe, qui n'est par exemple pas tangente à un cercle centré sur l'axe de rotation. A l'inverse, la partie menée 40 peut comprendre un anneau au regard des rampes 37. Chaque élément roulant 51 peut alors être libre de se déplacer entre une rampe 37 et ledit anneau durant le mode de fonctionnement désengagé et peut être coincé entre une rampe 37 et ledit anneau durant le mode de fonctionnement engagé.

Indépendamment des caractéristiques précédentes, le système 10 de connexion en rotation peut comporter au moins un palier 81, 82 de guidage en rotation, par exemple entre la partie menante 30 et la partie menée 40. Par exemple, un palier de guidage en rotation peut prendre la forme d'un roulement à billes.

Selon l'exemple illustré, un premier palier 81 de guidage est interposé radialement entre un tronçon de la partie menante 30, dénommé « premier tronçon de guidage menant 33 » par commodité en raison de son appartenance à la partie menante 30, et un tronçon de la partie menée 40, dénommé « premier tronçon de guidage mené 43 » par commodité en raison de son appartenance à la partie menée 40.

De même, un deuxième palier 82 de guidage est interposé radialement entre un tronçon de la partie menante 30, dénommé « deuxième tronçon de guidage menant 34 » par commodité en raison de son appartenance à la partie menante 30, et un tronçon de la partie menée 40, dénommé « deuxième tronçon de guidage mené 44 » par commodité en raison de son appartenance à la partie menée 40.

Indépendamment des caractéristiques précédentes, le système 10 de connexion en rotation est muni d'un dispositif de lubrification 60. Ce dispositif de lubrification 60 comprend un fluide de lubrification 61 mobile au sein du système pour lubrifier notamment les zones de contact de la roue libre. Par exemple, ce fluide de lubrification 61 comporte d'huile.

Pour forcer la circulation du fluide de lubrification 61 uniquement durant le mode de fonctionnement désengagé, le dispositif de lubrification 60 comporte un dispositif de mise en circulation fluidique 65.

Ce dispositif de mise en circulation fluidique 65 est solidaire en rotation, autour de l'axe de rotation AX, de la partie menée 40. Par exemple, le dispositif de mise en circulation fluidique 65 est solidaire d'un tronçon de la partie menée 40 dénommé par commodité « tronçon de pompage mené 42 », un tronçon dénommé « tronçon de pompage menant 32 » de la partie menante 30 étant radialement, au regard de l'axe de rotation AX, en vis-à-vis du tronçon de pompage menée 42.

Selon l'exemple illustré, le tronçon de pompage mené 42 est solidaire en rotation, autour de l'axe de rotation AX, du premier tronçon de guidage mené 43, ce premier tronçon de guidage mené 43 étant lui-même solidaire en rotation, autour de l'axe de rotation AX, du tronçon de liaison mené 41. Ces divers tronçons peuvent former des tronçons d'une même pièce monolithique ou au moins deux tronçons peuvent être liés l'un à l'autre de manière usuelle.

De même, le tronçon de pompage menant 32 est solidaire en rotation, autour de l'axe de rotation AX, du premier tronçon de guidage menant 33, ce premier tronçon de guidage menant 33 étant lui-même solidaire en rotation, autour de l'axe de rotation AX, du tronçon de liaison menant 31. Ces divers tronçons peuvent former des tronçons d'une même pièce monolithique ou au moins deux tronçons peuvent être liés l'un à l'autre de manière usuelle.

Alternativement, le tronçon de pompage mené 42 est directement solidaire en rotation, autour de l'axe de rotation AX, du tronçon de liaison mené 41, et le tronçon de pompage menant 32 est directement solidaire en rotation, autour de l'axe de rotation AX, du tronçon de liaison menant 31.

Indépendamment des caractéristiques précédentes, le dispositif de mise en circulation fluidique 65 est alors mis en rotation par rapport au tronçon de pompage menant 32 uniquement en présence d'une différence entre une vitesse de rotation menante autour de l'axe de rotation AX du tronçon de pompage menant 32 et une vitesse de rotation menée autour de l'axe de rotation AX du tronçon de pompage mené 42 et notamment d'une vitesse de rotation menante inférieure à une vitesse de rotation menée.

Selon les exemples des figures 1, 2, 4, 6 le dispositif de mise en circulation fluidique 65 comporte une vis sans fin 66. La vis sans fin 66 peut être fixée au tronçon de pompage mené 42 ou peut former une pièce monolithique avec ce tronçon de pompage mené 42.

La vis sans fin 66 peut comporter au moins une cannelure 67, 68 de forme hélicoïdale qui s'étend radialement du tronçon de pompage mené 42 vers le tronçon de pompage menant 32. Cette cannelure 67, 68 décrit une hélice autour de l'axe de rotation AX. La figure 4 illustre de manière schématique deux cannelures 67, 68.

Selon les exemples des figures 3 et 5, le dispositif de mise en circulation fluidique 65 comporte une pompe 70. Cette pompe 70 peut être munie d'un impulseur 71 mobile en rotation conjointement avec le tronçon de pompage mené 42. Par exemple, cet impulseur 71 comporte des aubes solidaires du tronçon de pompage mené 42. Les aubes s'étendent radialement du tronçon de pompage mené 42 vers le tronçon de pompage menant 32. L'impulseur 71 peut être fixé au tronçon de pompage mené 42 ou peut former une pièce monolithique avec ce tronçon de pompage mené 42.

Indépendamment de la nature du dispositif de mise en circulation fluidique 65, le tronçon de pompage mené 42 peut être de forme conique.

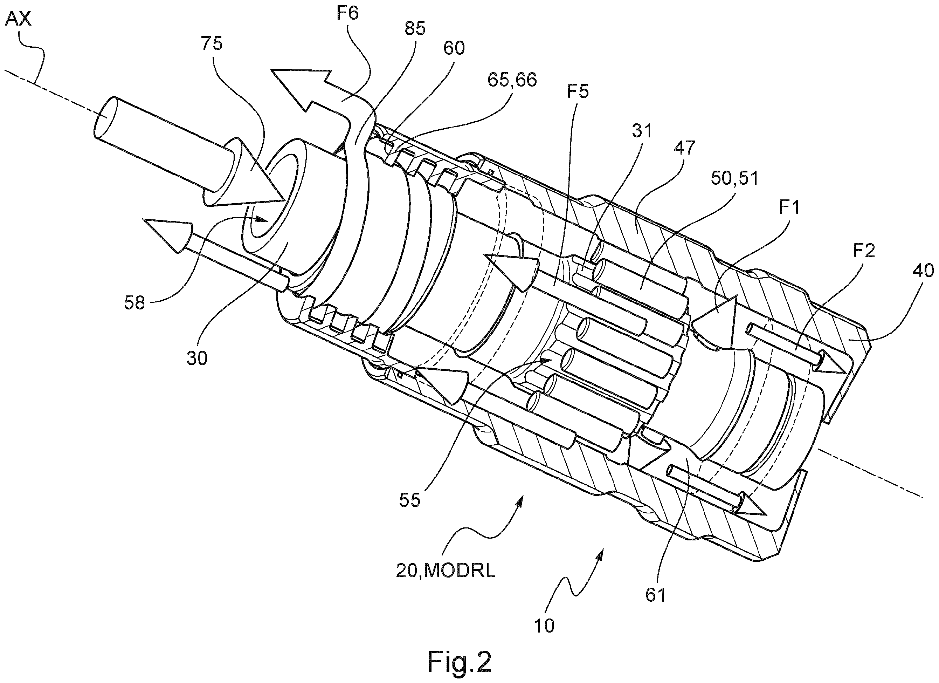

Les figures 1 à 6 illustrent des exemples divers de réalisation. Ainsi les figures 1 et 2 présentent une partie menée qui entoure une partie menante et qui est solidaire d'une vis sans fin. La figure 3 présente une partie menée qui entoure une partie menante et qui est solidaire d'un impulseur d'une pompe. La figure 4 présente une partie menée qui est entourée par une partie menante et qui est solidaire d'une vis sans fin. La figure 5 présente une partie menée qui est entourée par une partie menante et qui est solidaire d'un impulseur d'une pompe. La figure 6 présente une partie menée de forme conique qui entoure une partie menante et qui est solidaire d'une vis sans fin.

Indépendamment des caractéristiques précédentes, pour acheminer le fluide de lubrification le dispositif de lubrification 60 peut comporter au moins un orifice radial 36 débouchant dans un espace dénommé « espace d'injection 56 » par commodité. Cet espace d'injection 56 est situé radialement, par rapport à l'axe de rotation AX, entre un tronçon d'injection menant 35 de la partie menante 30 et un tronçon d'injection mené 45 de la partie menée 40.

Selon l'exemple de la figure 1, le tronçon de liaison mené 41 est directement solidaire en rotation, autour de l'axe de rotation AX, du tronçon d'injection mené 45, et le tronçon de liaison menant 31 est directement solidaire en rotation, autour de l'axe de rotation AX, du tronçon d'injection menant 35. Alternativement, un tronçon de guidage ou autre peut être interposé entre un tronçon de liaison et un tronçon d'injection correspondant.

Eventuellement et indépendamment de ce dernier aspect, le tronçon de liaison menant 31 est alors situé, le long de l'axe de rotation AX et donc selon une direction parallèle à l'axe de rotation AX, entre le tronçon de pompage menant 32 et le tronçon d'injection menant 35. De même, le tronçon de liaison mené 41 est situé, le long de l'axe de rotation AX et donc selon une direction parallèle à l'axe de rotation AX, entre le tronçon de pompage mené 42 et le tronçon d'injection mené 45.

Selon les exemples illustrés, le ou les orifices radiaux 36 sont ménagés dans la partie entourée. Cependant, l'inverse est aussi possible.

Selon un autre aspect, le dispositif de lubrification 60 peut comporter un injecteur 75 relié à un circuit de lubrification. L'injecteur 75 injecte alors le fluide de lubrification 61, le cas échéant dans l'espace interne 58, à proximité du ou des orifices radiaux. Le fluide de lubrification pénètre ensuite dans le système, et le cas échéant dans l'espace injection 56, selon un débit dit « débit d'alimentation ».

Indépendamment des caractéristiques précédentes, au moins une des partie menante 30 et partie menée 40 présente un ou plusieurs passages 85 pour évacuer le fluide de lubrification 61. Dès lors, le dispositif de mise en circulation fluidique 65 est positionné entre l'espace de liaison 55 et ce ou ces passages 85.

Par exemple, le fluide de lubrification 61 est introduit dans un espace interne de la partie entourée, et le tronçon de pompage menant ou mené qui entoure le tronçon de passage de la partie entourée comporte un tel passage 85 qui débouche vers un milieu extérieur au système. L'inverse est aussi possible.

Le système 10 peut comporter une ouverture 95 opposée à un passage 85 pour évacuer le fluide de lubrification 61 selon une autre direction.

Les figures 1 et 2 illustrent le fonctionnement de l'invention.

Quelle que soit la réalisation, durant une étape d'injection, le fluide de lubrification 61 peut être introduit dans le système 10 de connexion en rotation par un injecteur 75, par exemple dans l'espace interne selon la figure 1.

Ce fluide de lubrification 61 pénètre dans l'espace d'injection 56 par le ou les orifices radiaux 36 selon la flèche F1 et selon le débit d'alimentation.

Durant le mode de fonctionnement engagé MODENG de la figure 1, une première partie du fluide de lubrification 61 peut le cas échéant être évacuée par l'ouverture 95 selon la flèche F3. Une deuxième partie du fluide de lubrification 61 noie les organes de liaison selon les flèches F2 en se déplaçant avec un débit de fuite faible. Le débit de fuite peut être inférieur au débit d'alimentation pour noyer les zones de contact. En effet, les organes de liaison notamment peuvent induire un tel débit de fuite faible. Une fraction du fluide de lubrification 61 peut être évacuée par le ou les passages 85.

Durant le mode de fonctionnement désengagé MODRL de la figure 2, la partie menante 30 et la partie menée 40 sont désolidarisées en rotation autour de l'axe de rotation AX. Par conséquent, le procédé de l'invention comporte une étape de mise en rotation par rapport à la partie menante 30 du dispositif de mise en circulation fluidique 65. Le dispositif de mise en circulation fluidique 65 tend à aspirer le fluide de lubrification 61. Il en résulte un déplacement forcé, illustré par les flèches F5, du fluide de lubrification 61 au sein de l'espace de liaison 55. Contrairement au mode de fonctionnement engagé MODENG, le fluide de lubrification 61 ne tend pas à stagner ou à se déplacer très lentement au sein de l'espace de liaison mais est aspiré puis le cas échéant évacué par le ou les passages 85 selon la flèche F6. Le débit de fuite du fluide de lubrification dans l'espace de liaison 55 est alors élevé grâce au dispositif de mise en circulation fluidique 65. Ce débit de fuite peut tendre à être supérieur au débit d'alimentation pour vider le fluide de lubrification en dehors de l'espace de liaison.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention. L'invention est définie par les revendications ci-après.

## Revendications

1. Système (10) de connexion en rotation muni d'une roue libre (20), ladite roue libre (20) comprenant une partie menante (30) et une partie menée (40) qui sont mobiles en rotation autour d'un axe de rotation (AX), ladite roue libre (20) comprenant au moins un organe (50) de liaison en rotation agencé dans un espace de liaison (55), ledit espace de liaison (55) étant situé radialement par rapport à l'axe de rotation (AX) entre un tronçon de liaison menant (31) de la partie menante (30) et un tronçon de liaison mené (41) de la partie menée (40), ledit système (10) de connexion en rotation comprenant un dispositif de lubrification (60) pour lubrifier la roue libre (20), ledit dispositif de lubrification (60) comprenant un fluide de lubrification (61),
**caractérisé en ce que** ledit dispositif de lubrification (60) comporte un dispositif de mise en circulation fluidique (65) solidaire en rotation autour de l'axe de rotation (AX) d'un tronçon de pompage mené (42) de la partie menée (40), un tronçon de pompage menant (32) de la partie menante (30) et ledit tronçon de pompage mené (42) étant agencés l'un autour de l'autre radialement par rapport à l'axe de rotation (AX), ledit dispositif de mise en circulation fluidique (65) étant mis en rotation par rapport au tronçon de pompage menant (32) en présence d'une vitesse de rotation menante autour de l'axe de rotation (AX) dudit tronçon de pompage menant (32) inférieure à une vitesse de rotation menée autour de l'axe de rotation (AX) dudit tronçon de pompage mené (42) pour engendrer une circulation forcée dudit fluide de lubrification au sein dudit espace de liaison (55).

2. Système selon la revendication 1,
**caractérisé en ce que** le dispositif de mise en circulation fluidique (65) comporte une pompe (70).

3. Système selon la revendication 2,
**caractérisé en ce que** ladite pompe (70) est munie d'un impulseur (71) tournant qui est solidaire en rotation du tronçon de pompage mené (42).

4. Système selon la revendication 1,
**caractérisé en ce que** ledit dispositif de mise en circulation fluidique (65) comporte une vis sans fin (66).

5. Système selon la revendication 4,
**caractérisé en ce que** ladite vis sans fin (66) comporte au moins une cannelure (67, 68) hélicoïdale solidaire en rotation du tronçon de pompage mené (42).

6. Système selon l'une quelconque des revendications 1 à 5,
**caractérisé en ce que** ledit tronçon de pompage mené (42) est de forme conique.

7. Système selon l'une quelconque des revendications 1 à 6,
**caractérisé en ce que** ledit au moins un organe (50) de liaison en rotation comporte une pluralité d'éléments roulants (51), chaque élément roulant (51) étant mobile sur une rampe (37) de ladite partie menante (30).

8. Système selon l'une quelconque des revendications 1 à 7,
**caractérisé en ce que** ledit dispositif de lubrification (60) comporte au moins un orifice radial (36) débouchant dans un espace d'injection (56), ledit espace d'injection (56) étant situé radialement par rapport à l'axe de rotation (AX) entre un tronçon d'injection menant (35) de la partie menante (30) et un tronçon d'injection mené (45) de la partie menée (40).

9. Système selon la revendication 8,
**caractérisé en ce que** ledit tronçon de liaison menant (31) est situé entre ledit tronçon de pompage menant (32) et ledit tronçon d'injection menant (35), et ledit tronçon de liaison mené (41) est situé entre ledit tronçon de pompage mené (42) et ledit tronçon d'injection mené (45).

10. Système selon l'une quelconque des revendications 8 à 9,
**caractérisé en ce qu'**une partie entourée de la partie menée (40) est entourée au moins partiellement de la partie menante (30) ou une partie entourée de la partie menante est entourée au moins partiellement par la partie menée, ledit au moins un orifice radial (36) est ménagé dans la partie entourée, ladite partie entourée entourant un espace interne (58), ledit au moins un orifice radial (36) étant en communication fluidique avec l'espace interne (58) et l'espace d'injection (56).

11. Système selon la revendication 10,
**caractérisé en ce que** ledit dispositif de lubrification (60) comporte un injecteur (75) qui injecte ledit fluide de lubrification (61) dans ledit espace interne (58).

12. Système selon l'une quelconque des revendications 1 à 11,
**caractérisé en ce que** ledit système (10) de connexion en rotation comporte au moins un palier (81, 82) de guidage en rotation agencé entre la partie menante (30) et la partie menée (40).

13. Système selon l'une quelconque des revendications 1 à 12,
**caractérisé en ce qu'**au moins ladite partie menante (30) ou ladite partie menée (40) comporte au moins un passage (85) pour évacuer ledit fluide de lubrification (61), ledit dispositif de mise en circulation fluidique (65) étant disposé selon l'axe de rotation (AX) entre ledit espace de liaison (55) et ledit au moins un passage(85).

14. Véhicule (1),
**caractérisé en ce que** ledit véhicule (1) comporte un système (10) de connexion en rotation selon l'une quelconque des revendications 1 à 13.

15. Procédé de lubrification d'un système (10) de connexion en rotation qui est muni d'une roue libre (20), ladite roue libre (20) comprenant une partie menante (30) et une partie menée (40) mobile en rotation autour d'un axe de rotation (AX), ladite roue libre (20) comprenant au moins un organe (50) de liaison en rotation agencé dans un espace de liaison (55), ledit espace de liaison (55) étant situé radialement par rapport à l'axe de rotation (AX) entre un tronçon de liaison menant (31) de la partie menante (30) et un tronçon de liaison mené (41) de la partie menée (40), ledit système (10) de connexion en rotation comprenant un dispositif de lubrification (60) pour lubrifier la roue libre (20), ledit dispositif de lubrification (60) comprenant un fluide de lubrification (61),
**caractérisé en ce que** le procédé comporte les étapes suivantes :
- durant un mode de fonctionnement désengagé (MODRL) de la roue libre (20) pendant lequel ladite partie menante (30) et ladite partie menée (40) sont désolidarisées en rotation autour dudit axe de rotation (AX), mise en rotation, par rapport à un tronçon de pompage menant (32) de la partie menante (30), d'un dispositif de mise en circulation fluidique (65) du dispositif de lubrification (60) par différentiel de vitesse entre une vitesse de rotation menante autour de l'axe de rotation (AX) dudit tronçon de pompage menant (32) et une vitesse de rotation menée autour de l'axe de rotation (AX) d'un tronçon de pompage mené (42) solidaire en rotation du dispositif de mise en circulation fluidique (65), et déplacement forcé dudit fluide de lubrification (61) au sein dudit espace de liaison (55) au moins sous influence dudit dispositif de mise en circulation fluidique (65).

## Patentansprüche

1. Drehverbindungssystem (10) mit Freilauf (20), wobei der Freilauf (20) einen antreibenden Teil (30) und einen angetriebenen Teil (40) umfasst, die um eine Drehachse (AX) drehbar sind, wobei der Freilauf (20) mindestens ein Drehverbindungsglied (50) umfasst, das in einem Verbindungsraum (55) angeordnet ist, wobei der Verbindungsraum (55) radial in Bezug auf die Drehachse (AX) zwischen einem antreibenden Verbindungsabschnitt (31) des antreibenden Teils (30) und einem angetriebenen Verbindungsabschnitt (41) des angetriebenen Teils (40) angeordnet ist, wobei das Drehverbindungssystem (10) eine Schmiervorrichtung (60) zum Schmieren des Freilaufs (20) umfasst, wobei die Schmiervorrichtung (60) ein Schmierfluid (61) umfasst,
**dadurch gekennzeichnet, dass** die Schmiervorrichtung (60) eine Fluidzirkulationsvorrichtung (65) umfasst, die in Drehung um die Drehachse (AX) fest mit einem angetriebenen Pumpabschnitt (42) des angetriebenen Teils (40) verbunden ist, dass ein antreibender Pumpabschnitt (32) des antreibenden Teils (30) und der angetriebene Pumpabschnitt (42) um einander herum radial in Bezug auf die Drehachse (AX) angeordnet sind, dass bei Vorhandensein einer antreibenden Drehgeschwindigkeit um die Drehachse (AX) des antreibenden Pumpabschnitts (32), die kleiner ist als eine angetriebene Drehgeschwindigkeit des angetriebenen Pumpabschnitts (42), die Fluidzirkulationsvorrichtung (65) in Bezug auf den antreibenden Pumpabschnitt (32) um die Drehachse (AX), gedreht wird, um eine erzwungene Zirkulation des Schmierfluids innerhalb des Verbindungsraums (55) zu erzeugen.

2. System nach Anspruch 1,
**dadurch gekennzeichnet, dass** die Fluidzirkulationsvorrichtung (65) eine Pumpe (70) umfasst.

3. System nach Anspruch 2,
**dadurch gekennzeichnet, dass** die Pumpe (70) mit einem drehbaren Impeller (71) versehen ist, der mit dem angetriebenen Pumpabschnitt (42) drehfest verbunden ist.

4. System nach Anspruch 1,
**dadurch gekennzeichnet, dass** die Fluidzirkulationsvorrichtung (65) eine Schnecke (66) umfasst.

5. System nach Anspruch 4,
**dadurch gekennzeichnet, dass** die Schnecke (66) mindestens eine schraubenförmige Keilnut (67, 68) aufweist, die drehfest mit dem angetriebenen Pumpabschnitt (42) verbunden ist.

6. System nach einem der Ansprüche 1 bis 5,
**dadurch gekennzeichnet, dass** der angetriebene Pumpabschnitt (42) konisch geformt ist.

7. System nach einem der Ansprüche 1 bis 6,
**dadurch gekennzeichnet, dass** das mindestens eine Drehverbindungsglied (50) eine Mehrzahl von Wälzkörpern (51) aufweist, wobei jeder Wälzkörper (51) auf einer Rampe (37) des antreibenden Teils (30) beweglich ist.

8. System nach einem der Ansprüche 1 bis 7,
**dadurch gekennzeichnet, dass** die Schmiervorrichtung (60) mindestens eine radiale Öffnung (36) aufweist, die in einen Einspritzraum (56) mündet, wobei der Einspritzraum (56) radial zur Drehachse (AX) zwischen einem antreibenden Einspritzabschnitt (35) des antreibenden Teils (30) und einem angetriebenen Einspritzabschnitt (45) des angetriebenen Teils (40) angeordnet ist.

9. System nach Anspruch 8,
**dadurch gekennzeichnet, dass** der antreibende Verbindungsabschnitt (31) zwischen dem antreibenden Pumpabschnitt (32) und dem antreibenden Einspritzabschnitt (35) angeordnet ist, und der angetriebene Verbindungsabschnitt (41) zwischen dem angetriebenen Pumpabschnitt (42) und dem angetriebenen Einspritzabschnitt (45) angeordnet ist.

10. System nach einem der Ansprüche 8 bis 9,
**dadurch gekennzeichnet, dass** ein umgebener Abschnitt des angetriebenen Teils (40) zumindest teilweise von dem antreibenden Teil (30) umgeben ist oder ein umgebener Abschnitt des antreibenden Abschnitts zumindest teilweise von dem angetriebenen Abschnitt umgeben ist, dass die mindestens eine radiale Öffnung (36) in dem umgebenen Abschnitt ausgebildet ist, dass der umgebene Abschnitt einen Innenraum (58) umgibt, und dass die mindestens eine radiale Öffnung (36) in Fluidverbindung mit dem Innenraum (58) und dem Einspritzraum (56) steht.

11. System nach Anspruch 10,
**dadurch gekennzeichnet, dass** die Schmiervorrichtung (60) eine Einspritzvorrichtung (75) aufweist, die das Schmierfluid (61) in den Innenraum (58) einspritzt.

12. System nach einem der Ansprüche 1 bis 11,
**dadurch gekennzeichnet, dass** das Drehverbindungssystem (10) mindestens ein Drehführungslager (81, 82) aufweist, das zwischen dem antreibenden Teil (30) und dem angetriebenen Teil (40) angeordnet ist.

13. System nach einem der Ansprüche 1 bis 12,
**dadurch gekennzeichnet, dass** mindestens der antreibende Teil (30) oder der angetriebene Teil (40) mindestens einen Durchgang (85) zum Abführen des Schmierfluids (61) aufweist, wobei die Fluidzirkulationsvorrichtung (65) entlang der Drehachse (AX) zwischen dem Verbindungsraum (55) und dem mindestens einen Durchgang (85) angeordnet ist.

14. Verkehrsmittel (1),
**dadurch gekennzeichnet, dass** das Verkehrsmittel (1) ein Drehverbindungssystem (10) nach einem der Ansprüche 1 bis 13 aufweist.

15. Verfahren zum Schmieren eines Drehverbindungssystems (10) mit Freilauf (20), wobei der Freilauf (20) einen antreibenden Teil (30) und einen angetriebenen Teil (40) umfasst, der um eine Drehachse (AX) drehbar ist, wobei der Freilauf (20) mindestens ein Drehverbindungsglied (50) umfasst, das in einem Verbindungsraum (55) angeordnet ist, wobei der Verbindungsraum (55) radial in Bezug auf die Drehachse (AX) zwischen einem antreibenden Verbindungsabschnitt (31) des treibenden Teils (30) und einem angetriebenen Verbindungsabschnitt (41) des angetriebenen Teils (40) angeordnet ist, wobei das Drehverbindungssystem (10) eine Schmiervorrichtung (60) zum Schmieren des Freilaufs (20) umfasst, wobei die Schmiervorrichtung (60) ein Schmierfluid (61) umfasst,
**dadurch gekennzeichnet, dass** das Verfahren die folgenden Schritte umfasst:
- während eines ausgekuppelten Betriebsmodus (MODRL) des Freilaufs (20), in dem der antreibende Teil (30) und der angetriebene Teil (40) in Drehung um die Drehachse (AX) entkoppelt sind, Drehen einer Fluidzirkulationsvorrichtung (65) der Schmiervorrichtung (60) in Bezug auf einen antreibenden Pumpabschnitt (32) des antreibenden Teils (30) durch Geschwindigkeitsdifferenz zwischen einer Geschwindigkeit der antreibenden Drehung des antreibenden Pumpabschnitts (32) um die Drehachse (AX) und einer Geschwindigkeit der angetriebenen Drehung eines drehfest mit der Fluidzirkulationsvorrichtung (65) verbundenen angetriebenen Pumpabschnitts (42) um die Drehachse (AX), und Zwangsbewegen des Schmierfluids (61) innerhalb des Verbindungsraums (55) zumindest unter dem Einfluss der Fluidzirkulationsvorrichtung (65).

## Claims

1. Rotational connection system (10) provided with a free-wheel (20), said free-wheel (20) comprising a driving part (30) and a driven part (40) which are able to rotate about an axis of rotation (AX), said free-wheel (20) comprising at least one rotational link member (50) arranged in a linking space (55), said linking space (55) being located radially relative to the axis of rotation (AX) between a driving linking section (31) of the driving part (30) and a driven linking section (41) of the driven part (40), said rotational connection system (10) comprising a lubrication device (60) for lubricating the free-wheel (20), said lubrication device (60) comprising a lubricating fluid (61),
**characterized in that** said lubrication device (60) comprises a fluid circulation device (65) constrained to rotate about the axis of rotation (AX) of a driven pumping section (42) of the driven part (40), a driving pumping section (32) of the driving part (30) and said driven pumping section (42) being arranged one about the other radially with respect to the axis of rotation (AX), said fluid circulation device (65) being set in rotation with respect to the driving pumping section (32) when a driving speed of rotation of said driving pumping section (32) about the axis of rotation (AX) is lower than a driven speed of rotation of said driven pumping section (42) about the axis of rotation (AX), in order to generate a forced circulation of said lubricating fluid within said linking space (55).

2. System according to Claim 1,
**characterized in that** the fluid circulation device (65) comprises a pump (70).

3. System according to Claim 2,
**characterized in that** said pump (70) is provided with a rotary impeller (71) that is constrained to rotate with the driven pumping section (42).

4. System according to Claim 1,
**characterized in that** said fluid circulation device (65) comprises a worm screw (66).

5. System according to Claim 4,
**characterized in that** said worm screw (66) comprises at least one helical spline (67, 68) constrained to rotate with the driven pumping section (42).

6. System according to any one of Claims 1 to 5,
**characterized in that** said driven pumping section (42) is conical in form.

7. System according to any one of Claims 1 to 6,
**characterized in that** said at least one rotational link member (50) comprises a plurality of rolling elements (51), each rolling element (51) being able to move on a ramp (37) of said driving part (30).

8. System according to any one of Claims 1 to 7,
**characterized in that** said lubrication device (60) comprises at least one radial port (36) opening into an injection space (56), said injection space (56) being located radially with respect to the axis of rotation (AX) between a driving injection section (35) of the driving part (30) and a driven injection section (45) of the driven part (40).

9. System according to Claim 8,
**characterized in that** said driving linking section (31) is located between the driving pumping section (32) and said driving injection section (35), and said driven linking section (41) is located between said driven pumping section (42) and said driven injection section (45).

10. System according to any one of Claims 8 to 9,
**characterized in that** a surrounded part of the driven part (40) is surrounded at least partially by the driving part (30) or a surrounded part of the driving part is surrounded at least partially by the driven part, said at least one radial port (36) is provided in the surrounded part, said surrounded part surrounding an internal space (58), said at least one radial port (36) being in fluidic communication with the internal space (58) and the injection space (56).

11. System according to Claim 10,
**characterized in that** said lubrication device (60) comprises an injector (75) which injects said lubricating fluid (61) into said internal space (58).

12. System according to any one of Claims 1 to 11,
**characterized in that** said rotational connection system (10) comprises at least one rotational guide bearing (81, 82) arranged between the driving part (30) and the driven part (40).

13. System according to any one of Claims 1 to 12,
**characterized in that** at least said driving part (30) or said driven part (40) comprises at least one passage (85) for discharging said lubricating fluid (61), said fluid circulation device (65) being arranged along the axis of rotation (AX) between said linking space (55) and said at least one passage (85).

14. Vehicle (1),
**characterized in that** said vehicle (1) comprises a rotational connection system (10) according to any one of Claims 1 to 13.

15. Method for lubricating a rotational connection system (10) that is provided with a free-wheel (20), said free-wheel (20) comprising a driving part (30) and a driven part (40) that are able to rotate about an axis of rotation (AX), said free-wheel (20) comprising at least one rotational link member (50) arranged in a linking space (55), said linking space (55) being located radially relative to the axis of rotation (AX) between a driving linking section (31) of the driving part (30) and a driven linking section (41) of the driven part (40), said rotational connection system (10) comprising a lubrication device (60) for lubricating the free-wheel (20), said lubrication device (60) comprising a lubricating fluid (61),
**characterized in that** the method comprises the following steps:
- during a disengaged operating mode (MODRL) of the free-wheel (20) during which said driving part (30) and said driven part (40) are rotationally disengaged from each other about said axis of rotation (AX), a fluid circulation device of the lubrication device (65) of the lubrication device (60) is set in rotation relative to a driving pumping section (32) of the driving part (30) by speed differential between a driving speed of rotation about the axis of rotation (AX) of said driving pumping section (32) and a driven speed of rotation about the axis of rotation (AX) of a driven pumping section (42) constrained to rotate with the fluid circulation device (65), and the lubricating fluid (61) is forced to move within said linking space (55) at least under the influence of said fluid circulation device (65).
